# EUROPÄISCHE PATENTANMELDUNG

(11) **EP 0 812 988 A1**
(43) Veröffentlichungstag der Anmeldung: **17.12.1997**
(21) Anmeldenummer: 97109294.5
(22) Anmeldetag: 09.06.1997
(51) Int. Cl.: F04C 13/00, F04C 2/18

(54) **Verfahren und Vorrichtung zur Extrusion von Kautschukmischungen mittels einer Zahnradpumpe**

(30) Priorität: 13.06.1996 DE 19623514
(71) Anmelder: Paul Troester Maschinenfabrik, D-30519 Hannover (DE)
(72) Erfinder: Hasse, Hartmut, 25486 Alveslohe (DE); Gohlisch, Hans-Joachim, Dipl.-Ing., 30519 Hannover (DE)
(74) Vertreter: Junius, Walther, Dr.

(57) **Zusammenfassung**

Die Erfindung betrifft ein Verfahren und eine Vorrichtung zur Extrusion von Kautschukmischungen mittels einer Zahnradpumpe, deren beide Zahnräder (1) je einen Mischungsstreifen (19) durch Beschickungsöffnungen einziehen und durch eine gemeinsame Extrusionsöffnung (5) auspressen. Es ist die Aufgabe der Erfindung, in den Beschickungsstreifen befindliche oder während der Beschickung eingezogene oder während der Bearbeitung in dem Zahnradpumpenextruder gebildete Gas- und Lufteinschlüsse in einfacher Weise zu eliminieren oder zumindest zu reduzieren. Die Erfindung besteht darin, daß man hinter den Beschickungsöffnungen Luft und/oder Gas während des Transportweges der Mischung zu der Stelle, an der die beiden Zahnräder miteinander kämmen, durch Entlüftung, Entgasung oder Evakuierung abzieht. Dazu verwendet man eine Vorrichtung zur Extrusion von Kautschukmischungen mittels einer Zahnradpumpe, deren beiden Zahnräder in einem Gehäuse je eine Beschickungsöffnung und eine gemeinsame Extrusionsöffnung zugeordnet ist. Diese zeichnet sich dadurch aus, daß hinter den Beschickungsöffnungen (3) auf dem Transportweg der Mischung zu der Stelle (4), an der die beiden Zahnräder miteinander kämmen, mindestens eine Entlüftungs- Entgasungs oder Evakuierungsöffnung (6) angeordnet ist. Auf diese Weise gelingt es, bei der Beschickung eingezogene Luft zu eliminieren

## Beschreibung

Die Erfindung betrifft ein Verfahren und eine Vorrichtung zum Plastifizieren und Extrudieren von Kautschukmischungen und sonstigen Elastomeren mittels einer Zahnradpumpe, deren beide Zahnräder je einen Mischungsstreifen durch Beschickungsöffnungen einziehen und durch eine gemeinsame Extrusionsöffnung auspressen.

Für die Plastifizierung und Extrusion von Kautschukmischungen und sonstigen Elastomeren verwendet man meist Schneckenextruder, aber auch Zahnradpumpen. Unter den Zahnradpumpen zum Plastifizieren und Extrudieren von Kautschukmischungen und sonstigen Elastomeren wählt man vorzugsweise solche, deren beide Zahnräder je einen Mischungsstreifen durch Beschickungsöffnungen einziehen und durch eine gemeinsame Extrusionsöffnung auspressen. Dabei ist das gleichzeitige Einziehen zweier Mischungsstreifen wegen einer gleichmäßigeren und höheren Förderleistung und wegen einer gleichmäßigeren Belastung der Zahnräder von Vorteil. Die Verwendung einer extrudierenden Zahnradpumpe hat den Vorteil, daß während der Plastifizierung die in Bearbeitung befindliche Mischung nicht so hoch erhitzt wird wie im Schneckenextruder, jedoch den Nachteil, daß insbesondere bei höheren Drehzahlen und bei Unterfütterung durch ungleichmäßig dimensionierte Beschickungsstreifen das Extrudat Luft- und Gaseinschlüsse aufweist.

Treten solche Luft- und Gaseinschlüsse bei in Schneckenextrudern bearbeiteten Mischungen auf, bringt man Vakuum-Extruder zum Einsatz. Diese weisen eine Schnecke mit mindestens zwei Förderabschnitten auf, zwischen denen sich ein Abschnitt erhöhter Gangtiefe befindet. In diesem Abschnitt wird eine Evakuierung vorgenommem, damit die in Bearbeitung befindliche und in diesem Abschnitt locker und in dünnen Strängen vorliegende Mischung entgast wird. Hier wird nicht nur die mit dem Mischungsstreifen eingezogene Luft, sondern es werden auch sich unter der Wärmeeinwirkung bildende Gase aus der Mischung entfernt.

Bei Zahnradpumpenextrudern ist eine solche Entlüftung und Entgasung nur schwer möglich, denn von den Beschickungsöffnungen bis zu der Stelle, an der die beiden Zahnräder der Zahnradpumpe miteinander kämmen, erwärmt sich die Mischung nur geringfügig. Sie erwärmt sich jedoch an der Stelle, an der die beiden Zahnräder miteinander kämmen, sehr plötzlich und intensiv, und das auf kleinstem Raum. Diese Stelle des Kämmens der beiden Zahnräder ist schwer zugänglich.

Die vorliegende Erfindung geht von der Erkenntnis aus, daß im Extrudat befindliche Luft- und Gaseinschlüsse vornehmlich durch den Einzug von Luft beim Einzug der Beschickungsstreifen oder durch Lufteinschlüsse in den Beschickungsstreifen in die Mischung gelangen.

Die Erfindung vermeidet die Nachteile des Standes der Technik. Es ist die Aufgabe der Erfindung, in den Beschickungsstreifen befindliche oder während der Beschickung eingezogene oder während der Bearbeitung in dem Zahnradpumpenextruder gebildete Gas- und Lufteinschlüsse in einfacher Weise sicher zu eliminieren.

Die Erfindung besteht darin, daß man hinter den Beschickungsöffnungen Luft und/ oder Gas während des Transportweges der Mischung zu der Stelle, an der die beiden Zahnräder miteinander kämmen, durch Entlüftung, Entgasung oder Evakuierung abzieht.

Dazu verwendet man eine Vorrichtung zur Extrusion von Kautschukmischungen und sonstigen Elastomeren mittels einer Zahnradpumpe, deren beiden Zahnrädern in einem Gehäuse je ein Beschickungskanal und eine gemeinsame Extrusionsöffnung zugeordnet ist. Diese zeichnet sich dadurch aus, daß hinter den Beschickungskanälen auf dem Transportweg der Mischung zu der Stelle, an der die beiden Zahnräder miteinander kämmen, mindestens eine Entlüftungs- Entgasungs- oder Evakuierungsöffnung angeordnet ist, die in einen Entlüftungs- Entgasungs- oder Evakuierungskanal münden.

Auf diese Weise gelingt es problemlos, die bei der Beschickung eingezogene Luft zu eliminieren.

Dabei ist es zweckmäßig, wenn man Luft und/oder Gas durch Öffnungen in der Innenwand des Pumpengehäuses austreten läßt oder abzieht. In dieser Wand sind die Öffnungen leicht einbringbar. Sie bleiben an diesem Ort nahezu wartungsfrei.

Vorteilhaft ist es, daß man Luft und/oder Gas an einer Stelle austreten läßt oder abzieht, an der die Mischung noch nicht fließfähig ist. Auf diese Weise verhindert man ein Eindringen von Extrudat in die Austrittskanäle und insbesondere in die zur Vakuumquelle führende Leitung.

Dieses Verfahren kann man so ausführen, daß man Luft und/oder Gas durch mindestens einen radialen Kanal im Gehäuse austreten läßt oder abzieht. Dazu ordnet man mindestens einen radial im Gehäuse verlaufenden Entlüftungs-, Entgasungs- oder Evakuierungskanal in der Zahnradpumpe an.

Das Verfahren läßt sich aber auch dadurch ausführen, daß man Luft und/oder Gas durch mindestens einen in den seitlichen Gehäusewänden oder durch die Lager führenden Kanal im Gehäuse austreten läßt oder abzieht. Dazu ist dann mindestens ein in den seitlichen Gehäusewänden befindlicher oder durch die Lager führender Entlüftungs-, Entgasungs- oder Evakuierungskanal vorgesehen.

Das Wesen der Erfindung ist nachstehend anhand von in der Zeichnung schematisch dargestellten Ausführungsbeispielen näher erläutert. Es zeigen:
- Fig.1: einen Längsschnitt durch eine Zahnradpumpe mit radialen Entlüftungs-, Entgasungs- oder Evakuierungskanälen
- Fig 2: einen Querschnitt durch eine Zahnradpumpe der Fig.1 mit einer Gehäuseinnenwand mit Löchern für die radialen Entlüftung, Entgasung oder Evakuierung.
- Fig.3: einen Querschnitt durch eine Zahnradpumpe der Fig.1 mit einer einer Gehäuseinnenwand mit Schlitzen für die radialen Entlüftung, Entgasung oder Evakuierung.
- Fig.4: einen Längsschnitt durch eine Zahnradpumpe mit an die Stirnseiten der Zahnräder anschließenden Entlüftungs-, Entgasungs- oder Evakuierungskanälen
- Fig.5: einen Querschnitt durch die Zahnradpumpe der Fig.4.

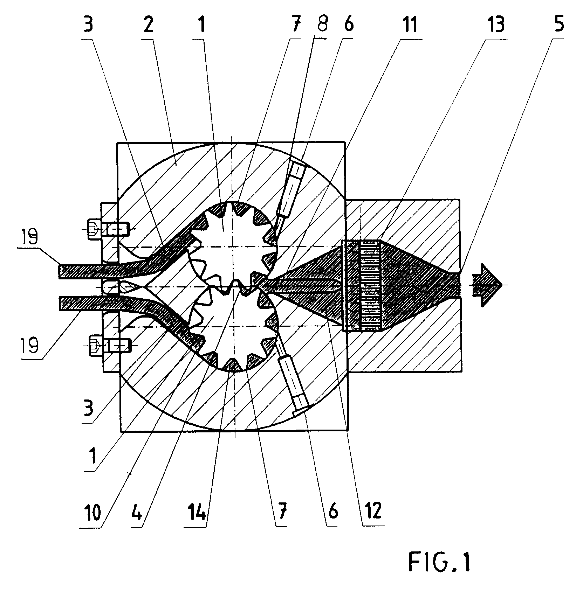

Die der Plastifizierung und Extrusion von Kautschukmischungen oder anderer Elastomere dienende Zahnradpumpe der Fig. 1 weist zwei Zahnräder 1 auf, die in einem Gehäuse 2 gelagert sind und miteinander kämmen. Jedem Zahnrad 1 wird ein nicht dargestellter Mischungsstreifen 19 der in der Zahnradpumpe zu plastifizierenden und unter Druck zu extrudierenden Kautschukmischung durch Beschickungskanäle 3 zugeführt. Diese Mischungsstreifen 19 füllen die Zahnlücken 14 der Zahnräder 1 zunächst nicht immer vollständig aus, sie haben einen kleineren Querschnitt als die Zahnlücken 14. Daher ist es unausbleiblich, daß Luft mit in die Zahnradpumpe eingezogen wird. Diese Luft befindet sich auf dem Weg von der Stelle 10, an der die Mischungsstreifen 19 eingezogen werden, zu der Stelle 4, an der die Zahnräder 1 miteinander kämmen, vornehmlich zu den Seiten der Zahnräder 1 und am Zahnlückengrund. Wird diese Luft mitgeschleppt bis an die Stelle 4, wo die Zahnräder miteinander kämmen und die in den Zahnlücken befindliche Kautschukmischung einer intensiven Bearbeitung unterzogen wird, gelangt Luft in die durch die Extrusionsöffnung 5 der Zahnradpumpe austretende Kautschukmischung.

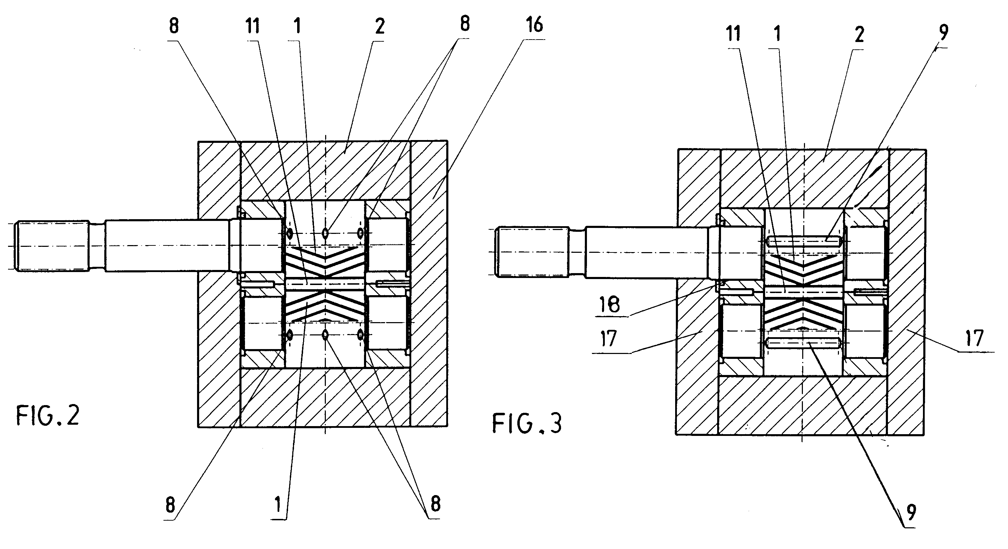

Um dieses zu verhindern sind Entlüftungs- bzw. Evakuierungskanäle 6 in das Gehäuse 2 eingearbeitet, an die eine nicht dargestellte Vakuumpumpe angeschlossen werden kann. Diese Entlüftungs- bzw. Evakuierungskanäle 6 treten durch die Gehäuseinnenwand 7 in Form von Löchern 8 (Fig.2) oder Schlitzen 9 (Fig.3).

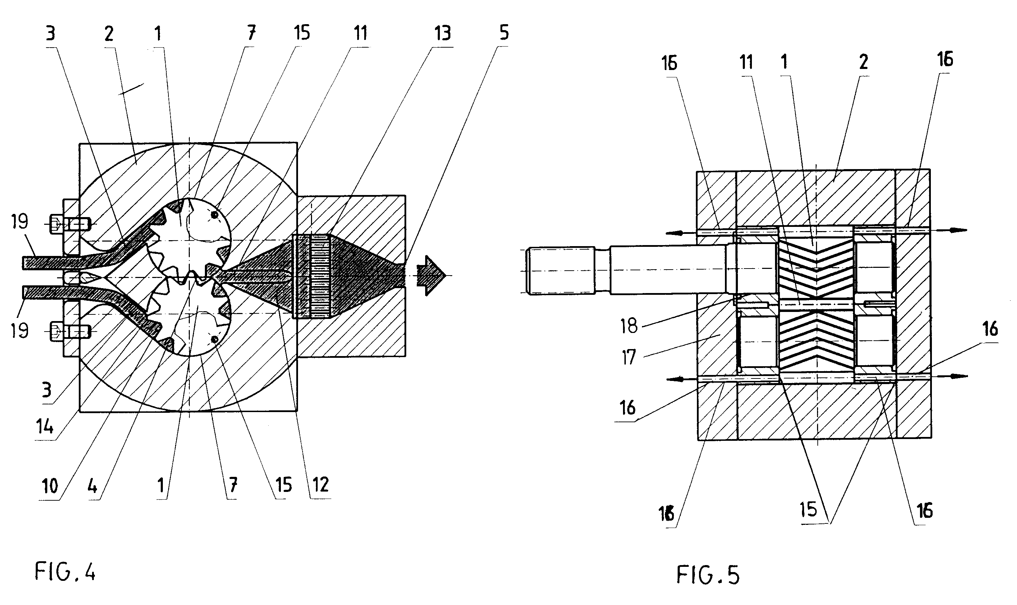

Eine vorteilhafte Variante kann die Einbringung von Entlüftungs- bzw. Evakuierungskanälen 16 (Fig. 4 und 5) in die Lager 18 bzw. seitlichen Gehäusewände 17 in der Höhe der jeweiligen Zahnfußdurchmesser sein.

Die in die Entlüftungs- bzw. Evakuierungskanäle 6,16 führenden Löcher 8,15 oder Schlitze 9 befinden sich in einem mittleren Bereich zwischen der Stelle 10, an der die Kautschukmischung eingezogen wird, und der Stelle 4, an der die Zahnräder 1 miteinander kämmen. In diesem mittleren Bereich ist die eingezogene Kautschukmischung noch nicht fließfähig. Somit kann fließfähiges Material nicht in die Löcher 8,15 oder Schlitze 9 eindringen und diese verstopfen.

Zweckmäßig ist es, daß man die aus der Austrittsöffnung 11 des Gehäuses 2 austretende plastifizierte Kautschukmischung strainert. Das erfolgt in dem Raum 12 des Gehäuses 2, in den die Austrittsöffnung 11 mündet und in den ein Sieb (Strainer) 13 eingebaut ist. Die plastifizierte, aufgeschlossene und gestrainerte Kautschukmischung verläßt den Raum 12 dann durch die Extrusionsöffnung 5, die mit den verschiedensten und leicht auswechselbaren Ausformmundstücken versehen sein kann.

### Liste der Bezugszeichen

- 1: Zahnrad
- 2: Gehäuse
- 3: Beschickungskanal
- 4: Stelle, an der die Zahnräder miteinander kämmen,
- 5: Extrusionsöffnung
- 6: Entlüftungs-, Entgasungs- oder Evakuierungskanal
- 7: Gehäuseinnenwand
- 8: Loch
- 9: Schlitz
- 10: Stelle, an der die Mischungsstreifen eingezogen werden,
- 11: Austrittsöffnung
- 12: Raum vor dem Sieb
- 13: Sieb (Strainer)
- 14: Zahnlücke
- 15: Loch
- 16: Entlüftungs-, Entgasungs- oder Evakuierungskanal
- 17: Gehäuseseitenwand
- 18: Lager
- 19: Zahnlücke

## Patentansprüche

1. Verfahren zur Plastifizierung und Extrusion von Kautschukmischungen und sonstigen Elastomeren mittels einer Zahnradpumpe, deren beide Zahnräder je einen Mischungsstreifen durch Beschickungsöffnungen einziehen und durch eine gemeinsame Extrusionsöffnung auspressen,
dadurch gekennzeichnet,
daß man hinter den Beschickungsöffnungen Luft und/oder Gas während des Transportweges der Mischung zu der Stelle, an der die beiden Zahnräder miteinander kämmen, durch Entlüftung, Entgasung oder Evakuierung abzieht.

2. Verfahren nach Anspruch 1,
dadurch gekennzeichnet,
daß man Luft und/oder Gas durch Öffnungen in der Innenwand des Pumpengehäuses austreten läßt oder abzieht.

3. Verfahren nach Anspruch 1,
dadurch gekennzeichnet,
daß man Luft und/oder Gas an einer Stelle austreten läßt oder abzieht, an der die Mischung noch nicht fließfähig ist.

4. Verfahren nach Anspruch 1,
dadurch gekennzeichnet,
daß man Luft und/oder Gas durch mindestens einen radialen Kanal im Gehäuse austreten läßt oder abzieht.

5. Verfahren nach Anspruch 1,
dadurch gekennzeichnet,
daß man Luft und/oder Gas durch mindestens einen in den seitlichen Gehäusewänden oder durch die Lager führenden Kanal im Gehäuse austreten läßt oder abzieht.

6. Vorrichtung zur Plastifizierung und Extrusion von Kautschukmischungen und sonstigen Elastomeren mittels einer Zahnradpumpe, deren beiden Zahnrädern in einem Gehäuse je ein Beschickungskanal und eine gemeinsame Extrusionsöffnung zugeordnet ist,
dadurch gekennzeichnet,
daß hinter den Beschickungskanälen (3) auf dem Transportweg der Mischung zu der Stelle (4), an der die beiden Zahnräder (1) miteinander kämmen, mindestens eine Entlüftungs- Entgasungs- oder Evakuierungsöffnung (8,9) angeordnet ist, die in einen Entlüftungs- Entgasungs- oder Evakuierungskanal (6,15) münden.

7. Vorrichtung nach Anspruch 6,
dadurch gekennzeichnet,
daß die Entlüftungs-, Entgasungs- oder EvakuierungsÖffnungen (8,9) in der Innenwand des Pumpengehäuses (2) angeordnet sind.

8. Vorrichtung nach Anspruch 6,
dadurch gekennzeichnet,
daß die Evakuierungsöffnungen (8,9) an einer Stelle angeordnet sind, an der die Mischung noch nicht fließfähig ist.

9. Vorrichtung nach Anspruch 6,
dadurch gekennzeichnet,
daß mindestens ein radial im Gehäuse (29) verlaufender Entlüftungs-, Entgasungs- oder Evakuierungskanal (6,15) vorgesehen ist.

10. Vorrichtung nach Anspruch 6,
dadurch gekennzeichnet,
daß mindestens ein in den seitlichen Gehäusewänden (17) befindlicher oder durch die Lager (18) führender Entlüftungs-, Entgasungs- oder Evakuierungskanal (16) vorgesehen ist.
